# EUROPÄISCHE PATENTANMELDUNG

(11) **EP 1 335 168 A2**
(43) Veröffentlichungstag der Anmeldung: **13.08.2003**
(21) Anmeldenummer: 03001412.0
(22) Anmeldetag: 22.01.2003
(51) Int. Cl.: F24J 2/05

(54) **Anordnung zur Erhöhung der Temperaturwechselbeständigkeit von fluiddurchströmten, druckbelasteten Glasrohren**

(30) Priorität: 11.02.2002 DE 10205548
(71) Anmelder: Schott Glas, 55122 Mainz (DE)
(72) Erfinder: Bauer, Günter, 95643 Tischenreuth (DE); Benz, Nikolaus, Dr., 92637 Weiden (DE)
(74) Vertreter: Koch, Annegret Christa

(57) **Zusammenfassung**

Die Erfindung betrifft Anordnung (2; 2.2; 2.6; 2.7) zur Erhöhung der Temperaturwechselbeständigkeit von fluiddurchströmten, druckbelasteten Glasrohren (1; 1.2; 1.6; 1.7). Diese umfasst ein Glasrohr (1; 1.2; 1.6; 1.7), in welches ein Innenelement (3; 3.2; 3.6; 3.7) eingeschoben wird. Das Innenelement (3; 3.2; 3.6; 3.7) kann als dünnwandiges Rohr (19; 19.2) oder schlauchförmiges Element ausgebildet sein. Gemäß einer ersten Ausführungsform ist der vom Innenelement (3; 3.2) umschlossene Hohlraum hydraulisch mit dem Innenraum (10) des Glasrohres (1; 1.2) gekoppelt. Die Wandstärke (s3) des Innenelementes (3; 3.2) ist kleiner als die Wandstärke des Glasrohres (1; 1.2) und das Innenelement (3; 3.2) ist im fluiddurchströmten Zustand des Glasrohres wenigstens teilweise frei von einer direkten Wärmekopplung mit dem Glasrohr (1; 1.2). Gemäß einer zweiten Ausführungsform vergrößert das Innenelement (3.6; 3.7) die Wandstärke des Glasrohres (1.6; 1.7). In diesem Fall liegt das Innenelement (3.6; 3-7) an dessen Innenumfang berührend an.

## Beschreibung

Die Erfindung betrifft eine Anordnung zur Erhöhung der Temperaturwechselbeständigkeit von fluiddurchströmten, druckbelasteten Glasrohren, im einzelnen mit den Merkmalen aus dem Oberbegriff der Ansprüche1 und 13, ferner eine Verwendung einer derartigen Anordnung in einem Wärmetauscher oder einem Absorberrohr für Sonnenkollektoren.

In Wärmetauschern und Absorberrohren von Sonnenkollektoren finden häufig rohrförmige Elemente aus Glas zur Führung eines Strömungsmediums Verwendung. Ein wesentliches Problem stellt dabei die Temperaturwechselbeständigkeit, welche als Funktion der Glasart, der geometrischen Ausführung und der Dimensionierung beschreibbar ist, dar. Fluiddurchströmte Glasrohre müssen aufgrund des im Innenraum vorherrschenden Druckes in der Regel eine Mindestwandstärke aufweisen. Dies führt dazu, dass extreme Temperaturwechsel des im Innenraum strömenden Fluides aufgrund des Wärmeleitverhaltens der Rohrwand und der damit verbundenen Spannungen zu Glasbrüchen führen kann. Insbesondere bei der Befüllung eines Absorberrohres aus Glas in hochevakuierten Sonnenkollektoren, welcher unter Stillstandsbedingungen mit einem kalten Wärmeträger befüllt wird, können Temperaturwechsel von ca. 250 K auftreten. Dies führt dann dazu, dass die Innenseite des Glasrohres sich sehr stark abkühlt, jedoch aufgrund des Wärmeleitverhaltens in der Wand des Glasrohres eine hohe Differenz zwischen dem Innenumfang und dem Außenumfang des Glasrohres zu beobachten ist. Der sich einstellende unzulässig hohe Temperaturgradient in der Wand des Glasrohres bewirkt aufgrund der damit verbundenen Spannungen in der Regel eine Beschädigung des Glasrohres, die oft zum vollständigen Bruch führen kann. Um bisher dieses Problem zu lösen, wurden im wesentlichen zwei Lösungswege beschritten. Gemäß einem ersten Lösungsansatz wurde eine Fluidberührung mit der Innenwand des Glasrohres durch ein hydraulisch getrenntes, fluidführendes Rohr, das in das Glasrohr eingeschoben wurde, vermieden, wobei dieses durch geeignete Dimensionierung und/oder zusätzliche wärmeübertragende Maßnahmen wärmeschlüssig an das Glasrohr gekoppelt wurde. Ein wesentlicher Nachteil dieser Ausführung bestand in den damit verbundenen höheren Kosten sowie einem schlechteren Wärmeübergang zwischen dem Glasrohr und dem Fluid, da der Wärmeübergang nicht direkt, sondern zuerst an die Wand des fluidführenden Rohres und dann durch Konvektion im im Zwischenraum enthaltenen Gas und wiederum Wärmeübergang an die Wand des Glasrohres an die Innenwand des Glasrohres bzw. bei abgekühltem Strömungsmedium in umgekehrter Reihenfolge erfolgen konnte.

Gemäß einem zweiten Lösungsansatz wurde die Verwendung höherwertiger Gläser angestrebt, welche bereits eine hinreichende Temperaturwechselbeständigkeit aufweisen. Diese Lösung ist jedoch durch erheblich höhere Kosten charakterisiert, wobei die Verfügbarkeit derartiger Materialien ebenfalls gewährleistet werden muß. Ferner können für bestimmte Standardanwendungen keine standardisiert vorgefertigten einfachen Glasrohre eingesetzt werden, sondern nur diese speziellen, höherwertigen Rohre.

Der Erfindung lag daher die Aufgabe zugrunde, eine Anordnung zur Erhöhung der Temperaturwechselbeständigkeit von fluiddurchströmten, druckbelasteten Glasrohren zu entwickeln, welche durch einen geringen konstruktiven und fertigungstechnischen Aufwand charakterisiert ist, geringe Kosten verursacht und hinsichtlich der Verfügbarkeit der zu verwendenden Materialien keine besonderen Ansprüche stellt. Die Verarbeitung soll möglichst leicht erfolgen und das einzelne Glasrohr soll möglichst leicht in dieser Anordnung integrierbar sein.

Die erfindungsgemäße Lösung ist durch die Merkmale der Ansprüche 1 und 16 charakterisiert. Vorteilhafte Ausgestaltungen sind in den Unteransprüchen beschrieben.

Die Anordnung zur Erhöhung der Temperaturwechselbeständigkeit von fluiddurchströmten, druckbelasteten Glasrohren umfasst ein von einem Fluid durchströmbaren und in diesem Zustand druckbelastbares Glasrohr, in welches erfindungsgemäß ein hohlzylindrisches Innenelement eingebracht wird, welches eine geringere Wandstärke als das Glasrohr aufweist und im beströmten Zustand des Glasrohres wenigstens teilweise, vorzugsweise vollständig frei von einer direkten Wärmekopplung mit dem Glasrohr ist. D.h., dass das Innenelement beidseitig - am Außen- und Innenumfang - von Fluid umströmt wird. Die Umströmung erfolgt bei vollständig koaxialer Anordnung des Innenelementes zum Glasrohr drucklos. Zwischen dem Innenraum des Innenlementes und dem übrigen Innenraum des Glasrohres besteht eine hydraulische Kopplung, d.h. es erfolgt keine von der Fluidführung im Zwischenraum zwischen Außenumfang des Innenelementes und Innenumfang des Glasrohres getrennte Fluidführung im Innenraum des Innenelmentes, d.h. dem vom Innenumfang umgrenzten Bereich. Aufgrund des damit verbundenen Wärmeüberganges zwischen dem Fluid und dem Innenelement kann die Abkühlung der Innenfläche des Glasrohres verzögert werden, so dass unzulässige Temperaturgradienten in der Wand des Glasrohres vermieden werden. Das Innenelement weist eine geringere Wandstärke als das Glasrohr auf.

Das hohlzylindrische Innenelement kann von einem
1) rohrförmigen Element oder
2) von einem schlauchförmigen Element
gebildet werden. Im ersten Fall wird das Innenelement von einem dünnwandigen Glas- oder Kunststoffohr gebildet. Im zweiten Fall kann das Innenelement entsprechend der Werkstoffwahl und Dimensionierung in axialer und/oder radialer Richtung flexibel ausgeführt sein. Dies bietet den Vorteil, dass die erfindungsgemäße Lösung bei sehr hoher Elastizität des schlauchförmigen Innenelementes auch sehr einfach in gekrümmten längeren Rohren zum Einsatz gelangen kann, wobei der Aufwand für das Einschieben des Innenelementes relativ gering ist. Gemäß einer besonders vorteilhaften Ausgestaltung werden vorzugsweise zur einfachen Montage dünnwandige Kunststoffschläuche als Innenelemente verwendet. Bei diesen muß während der Montage nicht zusätzlich Rücksicht auf eventuelle Bruchgefahren durch mechanische Beanspruchungen genommen werden.

Das Innenelement, unabhängig von dessen Ausgestaltung als dünnwandiges Glas- oder Kunststoffrohr oder schlauchförmiges Element - kann dabei frei im Glasrohr ohne Führung oder aber mit Führung geführt werden. Bei Anordnung ohne Führung erfolgt im nichtbeströmten Zustand ein Anliegen des Innenelementes am Innenumfang des Glasrohres, während im beströmten Zustand die Lage des Innenrohres gegenüber dem Glasrohr aufgrund des strömenden Fluides fixiert wird. Im anderen Fall, bei Ausführung mit Führung, kann die Führung entweder
a) einteilig mit dem Glasrohr
b) einteilig mit dem Innenelement
c) als separates Element
ausgeführt sein.

Vorzugsweise findet die Lösung c) Verwendung, da hier keine besonderen Maßnahmen an den Elementen Glasrohr oder Innenelement vorzunehmen sind und somit standardisierte Elemente bzw. vorgefertigte Elemente verwendet werden können, die bei Bedarf mit einer zusätzlichen Führung kombiniert werden können. Diese Führung kann form- und kraftschlüssig mit dem Glasrohr verbunden sein. Die Führung wird vorzugsweise kraftschlüssig im Glasrohr fixiert., beispielsweise durch Klemmung. Die Führung kann ferner mit dem Innenelement kraft- und/oder formschlüssig gekoppelt sein. Zur Vermeidung unnötiger Spannungen wird die Verbindung zwischen Führung und Innenelement mit einer sehr großen Passung versehen, so dass lediglich eine grobe Lagefixierung des Innenelementes gegenüber dem Glasrohr erfolgt. Die Hauptfunktion der Führung ist dabei in der Lagefixierung im unbeströmten Zustand, insbesondere während des Transportes der erfindungsgemäßen Anordnung zu sehen, um Beschädigungen am Innenelement oder dem Glasrohr zu vermeiden.

Vorzugsweise erstreckt sich das Innenelement über die gesamte axiale Erstreckung des Glasrohres, so dass über die gesamte Länge des Glasrohres ein analoges Abkühlverhalten erzielt werden kann. Es ist jedoch auch denkbar, insbesondere bei sehr langen Glasrohren, eine Vielzahl von Innenelement vorgesehen sind, die einander benachbart angeordnet jedoch frei von einer Verbindung miteinander sind. Dies bietet den Vorteil, dass das Innenelement nicht zwangsläufig auf die Länge des Glasrohres angepasst werden muss, sondern auch hier vorgefertigte, eventuell standardisierte Innenteilelemente verwendet werden können, die durch Zusammenführen die Einheit Innenelement bilden.

Bei der ersten Lösung erfolgt eine Wärmekopplung zwischen dem Innenelement und der Wand des Glasrohres über das Fluid. Gemäß einem weiteren zweiten Lösungsansatz wird die Wärmekopplung zwischen Innenelement und Glasrohr dadurch realisiert, dass entweder
a) das Innenelement derart ausgestaltet ist, dass dieses mit seinem Außenumfang am Innenumfang des Glasrohres anliegt oder
b) das Glasrohr mit einer Beschichtung versehen ist, welche die Funktion des Innenelementes übernimmt.

In diesem Fall erfolgt damit die Ausgestaltung einer mehrschichtigen Wand, wobei die Schichten unterschiedliche Wärmeleitfähigkeit besitzen. Dadurch wird der direkte Kontakt des Fluides mit der Innenfläche des Glasrohres vermieden und eine Abkühlung erfolgt lediglich indirekt über die Beschichtung bzw. das Innenelement. Das Innenelement wird hier ebenfalls von einem rohrförmigen oder schlauchartigen Element gebildet, wobei der Innenumfang des Glasrohres dem Außenumfang des Innenelementes entspricht. Als Werkstoff finden vorzugsweise Kunststoffe Verwendung, beispielsweise PTFE.

Die erfindungsgemäße Lösung ist für Glasrohre verwendbar mit lediglich einer Außenwand und Glasrohre mit im Innern angeordneten Rohren zur koaxialen Führung des Strömungsmediums. Besondere Einsatzgebiete für die erfindungsgemäße Anordnung sind Wärmetauscher, bei welchem die Wärmeträger führenden Elemente von Glasrohren gebildet werden und ferner Absorberrohre für Sonnenkollektoren.

Die erfindungsgemäße Lösung ist nachfolgend anhand von Figuren erläutert. Darin ist im einzelnen folgendes dargestellt:
- Figur 1: verdeutlicht in schematisch vereinfachter Darstellung anhand eines Schnittes durch ein Glasrohr eine erste erfindungsgemäße Ausführung;
- Figuren 2a und 2b: verdeutlichen anhand einer Schnittdarstellung durch ein Glasrohr eine zweite erfindungsgemäße Ausgestaltung;
- Figur 3: verdeutlicht eine Ausführung mit Innenelement, welches sich in axialer Richtung über die Länge des Glasrohres erstreckt;
- Figur 4: verdeutlicht eine Ausführung mit in axialer Richtung hintereinander angeordneten Innenelementen;
- Figur 5: verdeutlicht eine Ausgestaltung mit Führung des Innenelementes im Glasrohr;
- Figur 6: zeigt eine weitere Ausführung mit einem Innenelement, welches direkt wärmetechnisch mit der Wand des Glasrohres gekoppelt ist;
- Figur 7: verdeutlicht eine Ausgestaltung eines Glasrohres mit Beschichtung an der Innenfläche.

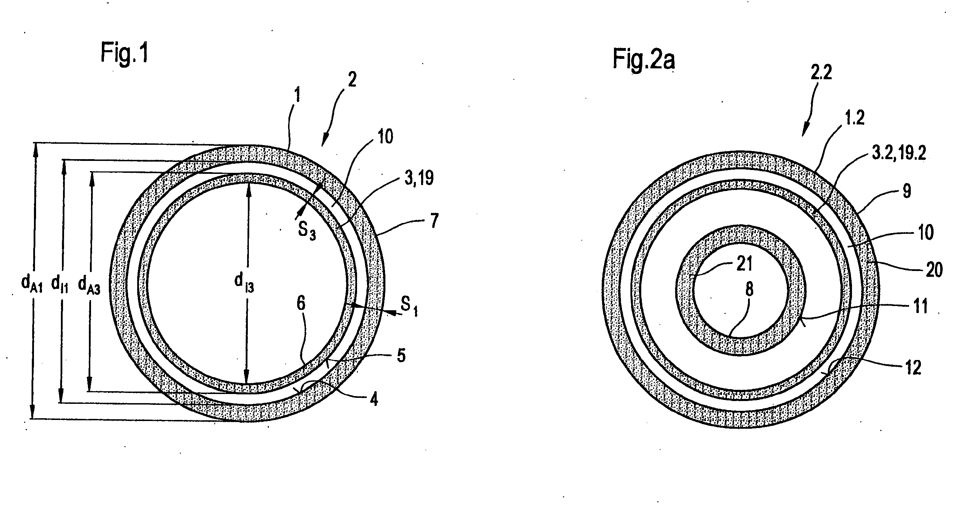

Die Figur 1 verdeutlicht anhand einer schematisch vereinfachten Schnittdarstellung durch ein Glasrohr 1 eine erfindungsgemäße Anordnung zur Erhöhung der Temperaturwechselbeständigkeit von fluiddurchströmten, druckbelasteten Glasrohren. Die Anordnung ist mit 2 bezeichnet. Diese umfasst ein Innenelement 3 in Form eines dünnwandigen Glasrohres 19, welches in das zu schützende Glasrohr 1, insbesondere den durch dieses umschlossenen Innenraum 10 eingeschoben wird. Glasrohr 1 und Innenelement 3 sind hydraulisch miteinander gekoppelt, d.h. das Innenelement 3 bildet keinen getrennten Innenraum zum Innenraum 10. Der Außendurchmesser d_{A3} des dünnwandigen Rohres 19 ist kleiner als der Innendurchmesser d_{I1} des Glasrohres 1. Im durchströmten Zustand des Glasrohres 1 sind beide - Glasrohr 1 und dünnwandiges Rohr 19- frei von einer direkten Wärmekopplung durch direkten Kontakt, insbesondere der durch den Innendurchmesser d_{I1} charakterisierten Innenfläche 4 des Glasrohres 1 und der Außenfläche 5 des Innenelementes 3 in Form des dünnwandigen Rohres 19, welche durch den Außendurchmesser d_{A3} charakterisiert ist. Das dünnwandige Rohr 19 weist dabei im Querschnitt betrachtet eine geringere Wandstärke s₃ als das Glasrohr 1 auf. Die Wandstärke s₁ ist dabei eine Funktion des durch das Fluid im Glasrohr 1 vorherrschenden Druckes. Diese bedingt bei Durchströmung eine bestimmte erforderliche Mindestwandstärke s₁. Die Mindestwandstärke des dünnwandigen Rohres 19, kann wesentlich geringer sein, da aufgrund der beidseitigen Umströmung, d.h. am Innenumfang und am Außenumfang, keine einseitige Druckwirkung auf die Wand 6 des Innenelementes 3 ausgeübt wird, welches als dünnwandiges Rohr 19 ausgeführt ist. Eine Änderung der Temperatur des das Glasrohr 1 durchströmenden Fluides bewirkt aufgrund von Wärmeleitung, Wärmeübergang und Konvektion im Fluid eine Änderung der Temperatur an der Wand 7 des Glasrohres 1, insbesondere der durch den Innendurchmesser dᵢ. charakterisierten Innenfläche 4. Insbesondere beim Einsatz in Wärmetauschern oder als Absorberrohr wird das Glasrohr 1 unter Stillstandsbedingungen mit einem kalten Fluid befüllt. Der Temperaturwechsel kann dabei ca. 250 K betragen. Ein Wärmeübergang nur zwischen der Wand 7 und dem Fluid führt dazu, dass die Innenfläche 4 des Glasrohres 1 sich schnell abkühlt. Durch Vorsehen des Innenelementes 3 in Form des dünnwandigen Rohres 19 erfolgt auch hier aufgrund von Konvektion im Fluid ein Übergang zwischen diesem und der Wand 6 und dem Fluid. Zwischen beiden Rohren - Glasrohr 1 und Rohr 19- findet damit kein direkter Wärmeaustausch statt, sondern lediglich ein indirekter über das das Glasrohr 1 durchströmende Fluid. Das dünnwandige Rohr 19 ist vorzugsweise aus Glas gefertigt.

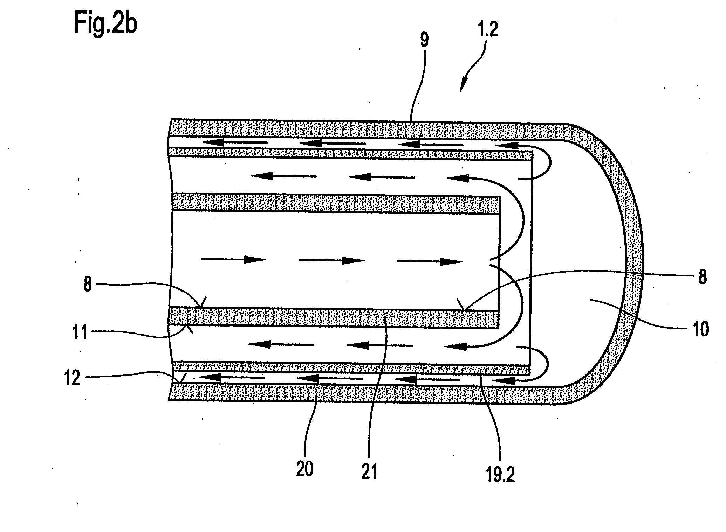

Die Figuren 2a und 2b verdeutlichen eine erfindungsgemäße Anordnung 2.2 für ein Glasrohr 1.2 mit koaxialer Durchströmung, wie beispielsweise für Vakuumröhrenkollektoren einsetzbar, in zwei Schnittansichten. Das Glasrohr 1.2 umfasst ein erstes, einseitig verschlossenes äußeres Rohr 20, welches die Außenwand 9 zur Begrenzung des Innenraumes 10 bildet. Ferner umfasst das Glasrohr 1.2 ein zweites inneres Glasrohr 21, welches im Innenraum 10 angeordnet ist und eine koaxiale Durchströmung des Glasrohrs 1.2 ermöglicht. Dazu ist das zweite innere Glasrohr 21 koaxial zum ersten, einseitig verschlossenen äußeren Rohr 20 in diesem angeordnet und ist zum Innenumfang am äußeren Rohr 20, insbesondere der verschlossenen Seite hin geöffnet ausgeführt. Der Innenraum 10 wird somit durch den Innenumfang 8 des inneren Glasrohres 21, den Außenumfang 11 des zweiten inneren Glasrohres 21 und den Innenumfang 12 der Außenwand 9, welche vom ersten, einseitig verschlossenem äußeren Rohr 20 gebildet wird, begrenzt. In den Innenraum 10 des Hohlrohres wird erfindungsgemäß ein hohlzylindrisches Innenelement 3.2 in Form eines dünnwandigen Rohres 19.2, vorzugsweise aus Glas eingeführt. Dieses ist im Innenraum 10 zwischen innerem Rohr 21 und äußerem Rohr 20 derart angeordnet, dass es wenigstens im durchströmten Zustand teilweise, vorzugsweise vollständig frei von einer Berührung mit dem Außenumfang 11 und/oder dem Innenumfang 12 des inneren Glasrohres 21 bzw. der vom ersten äußeren Rohr 20 gebildeten Außenwand 9 ist. Auch hier sind die Wandstärken von erstem äußeren Rohr 20 und zweitem inneren Rohr 21 gegenüber der Wandstärke s₃ unterschiedlich ausgeführt, wobei die Rohre 20 und 21 durch eine größere Wandstärke als die des Innenelementes 3.2 charakterisiert sind. Das Innenrohr 3.2 wird daher auch als dünnwandiges Rohr bezeichnet. Auch hier kann die Abkühlung am Innenumfang 12 der Außenwand 9 aufgrund der Konvektion im Fluid und dem Wärmeübergang zum dünnwandigen Rohr 19.2 verzögert werden, was zur Verbesserung der Temperaturwechselbeständigkeit des Glasrohres 1.2 beiträgt. Das zweite innere Rohr 21 hält dabei der Temperaturwechselbeanspruchung stand, da sowohl dessen Innenumfang 8 als auch Außenumfang 11 umströmt werden. Unzulässige Temperaturgradienten an den Wänden der Rohre 20 und 21 des Glasrohres 1.2 können somit vermieden werden.

Bei den in den Figuren 1 und 2 dargestellten Ausführungen ist das Innenelement 3 als dünnwandiges Rohr 19, 19.2 ausgeführt, das heißt als rohrförmiges Element mit festem bzw. konstantem Querschnitt. Das dünnwandige Rohr ist ferner dadurch charakterisiert, dass dieses über seine axiale Erstreckung durch eine feste Formgebung charakterisiert ist.

Gemäß eines weiteren Lösungsansatzes kann anstatt eines dünnwandigen Rohres 19, 19.2 für das Innenelement 3, 3.2 auch ein schlauchförmiges Element, vorzugsweise ein dünnwandiger elastischer Schlauch, vorzugsweise aus Kunststoff, verwendet werden. Die erfindungsgemäße Anordnung entspricht dann denen in den Figuren 1 und 2 beschriebenen, wobei jedoch der dünnwandige Kunststoffschlauch sowohl in radialer als auch axialer Richtung eine größere Flexibilität als das dünnwandige Rohr aufweist. Für beide Lösungen besteht die Möglichkeit, die Innenelemente 3 frei, d.h. ohne Fixierung der Lage gegenüber dem Glasrohr 1, im Glasrohr 1 zu führen. In diesem Fall erfolgt die Lagefixierung allein aufgrund der beim Durchströmen mit einem Fluid auf das Innenelement 3 wirkenden Kräfte.

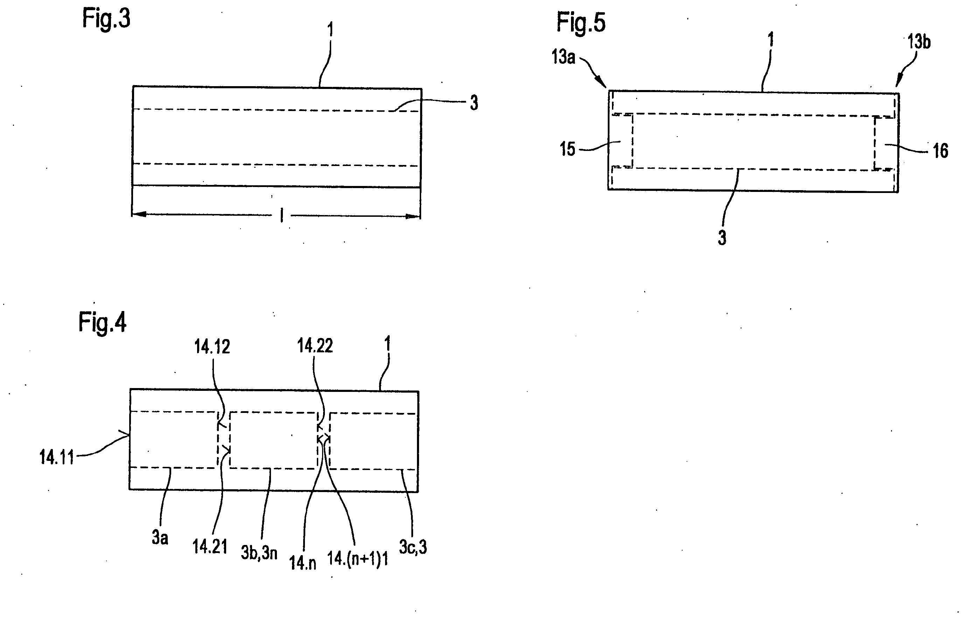

Entsprechend einer besonders vorteilhaften Ausgestaltung erstreckt sich das Innenelement 3, wie in der Figur 3 für Ausführungen des Innenelementes als Innenrohr oder dünnwandiger Kunststoffschlauch über die gesamte Erstreckung I des Glasrohres 1. Bei besonders langen Glasrohren 1 ist jedoch der Einschub des Innenelementes 3 mit erhöhtem Aufwand verbunden, sollen Beschädigungen vermieden werden. Daher ist es denkbar, wie in der Figur 4 wiedergegeben, eine Mehrzahl von Innenelementen 3a, 3b und 3c vorzusehen, welche in axialer Richtung hintereinander bzw. benachbart zueinander anzuordnen, wobei diese frei von einer direkten Verbindung miteinander sind. Um die erfindungsgemäße Funktion zu erfüllen, ist es jedoch nicht zwangsläufig erforderlich, dass die einzelnen Innenelemente 3a bis 3.n sich an ihren zueinander weisenden Stirnseiten 14.12 und 14.21 bis 14.n2 und 14.(n+1)1, sich berühren müssen. Abstände a zwischen zwei in axialer Richtung einander benachbart angeordneten Innenelementen 3.n und 3.n+1 sind ebenfalls denkbar, wobei diese Abstände a möglichst gering gehalten werden sollten und nicht größer als die axiale Erstreckung eines Innenelementes 3.n betragen sollte. Eine derartige Ausgestaltung ist in der Figur 4 in schematisch vereinfachter Darstellung in einer Seitenansicht auf ein Glasrohr 1 wiedergegeben.

Bezüglich der Lagefixierung zwischen dem Glasrohr 1 und dem Innenelement 3 besteht des weiteren die Möglichkeit, das Innenelement 3 im Glasrohr 1 zu fixieren. Eine Möglichkeit ist in Figur 5 dargestellt. Daraus ist ersichtlich, dass jeweils in den axialen Endbereichen 13a, 13b des Innenelementes 3 entsprechende Führungen 15 und 16 angeordnet sind. Diese Führungen können unterschiedlich ausgestaltet sein und vom Glasrohr 1 gebildet werden oder aber vorzugsweise von einem separaten Element, welches form- oder kraftschlüssig mit dem Innenelement 3 und dem Glasrohr 1 verbunden ist.

Figur 5 verdeutlicht dabei die Ausgestaltung der Führungen 15 und 16 in Form jeweils einer Halterung, welche in das Innenelement 3 eingreift und um gegenüber dem Innenumfang des Glasrohres 1 verspannt ist. Diese Führungen 15 und 16 werden vorzugsweise kraftschlüssig im Glasrohr 1 fixiert, hier durch Klemmung. Die Führung kann ferner mit dem Innenelement kraft- und/oder formschlüssig gekoppelt sein. Im dargestellten Fall wird zur Vermeidung unnötiger Spannungen die Verbindung zwischen Führung 15 bzw. 16 und Innenelement 3 mit wenigstens einer Spielpassung versehen, so dass lediglich eine grobe Lagefixierung des Innenelementes gegenüber dem Glasrohr erfolgt. Die Hauptfunktion der Führung ist dabei in der Lagefixierung im unbeströmten Zustand, insbesondere während des Transportes der erfindungsgemäßen Anordnung zu sehen, um Beschädigungen am Innenelement oder dem Glasrohr zu vermeiden.

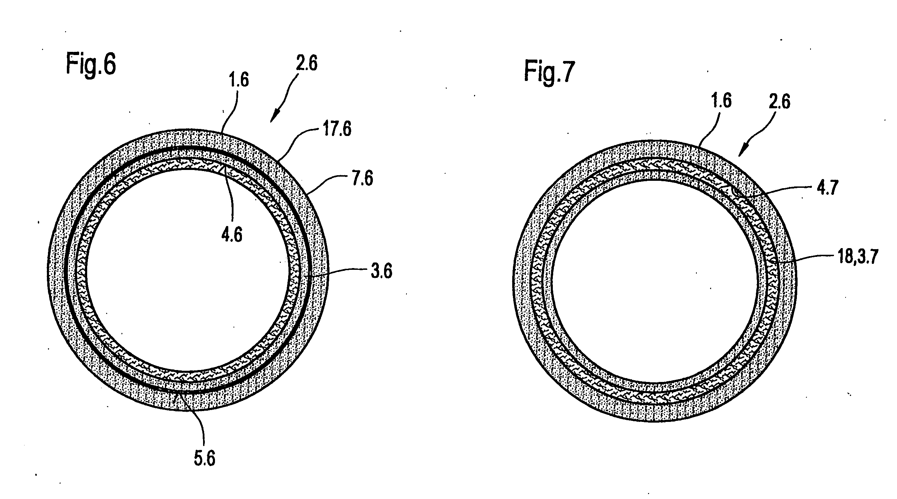

Die Figur 6 verdeutlicht eine zweite Ausführungsform einer erfindungsgemäßen Anordnung 2.6 zur Erhöhung der Temperaturwechselbeständigkeit von fluiddurchströmten druckbelasteten Glasrohren 1.6. Das Glasrohr 1.6 ist zum Querschnitt in schematisch vereinfachter Darstellung wiedergegeben. Bei dieser Ausführung ist der Außendurchmesser d_{A3} des Innenelementes 3.6 derart bemessen, dass dessen Außenfläche 5.6 an der Innenfläche 4.6 des Glasrohres 1.6 anliegt. Das Innenelement ist jedoch nicht kraft- oder formschlüssig mit dem Glasrohr 1.6 verbunden. Die Wand 7.6 des Glasrohres 1.6 und 6.6 des Innenelementes 3.6 bilden dabei funktional eine mehrschichtige Wand 17.6, welche aus zwei Schichten besteht. Beide Schichten, die durch die Wand 6.6 gebildete Schicht und die durch die Wand 7.6 gebildete Schicht, zeigen sich durch ein unterschiedliches Wärmedurchgangsverhalten aus, so dass beim Durchströmen des Rohres mit einem Fluid geringer Temperatur eine Abkühlung der Innenfläche 4.6 des Glasrohres 1.6 nur langsam erfolgt, da quasi die Wand 6.6 als erste Schicht zwischengeschaltet ist. Wird für die Wand 6.6 ein Werkstoff gewählt, welcher eine schlechte Wärmeleitfähigkeit besitzt, kann die Abkühlung der Innenfläche 4.6 sehr stark verzögert werden, so dass unzulässig hohe Spannungen, welche zur Beschädigung des Glasrohres 1.6 führen, vermieden werden. Vorzugsweise werden für das Innenelement 3.6 Materialien verwendet, die einen hohen Wärmedurchgangswiderstand aufweisen.

Das Innenelement 3.6 gemäß Figur 6 kann dabei wiederum von einem dünnwandigen Glasrohr gebildet werden oder aber einem dünnwandigen schlauchartigen Element, vorzugsweise einem Kunststoffschlauch.

Gemäß einer Weiterentwicklung der Ausführung von Figur 6 wird gemäß Figur 7 das Glasrohr 1.7 an der Innenfläche 4.7 mit einer Beschichtung 18 versehen, wobei diese die Funktion des Innenelementes 3.7 übernimmt. Als Beschichtung 18 wird vorzugsweise ein Kunststoffwerkstoff verwendet, welcher vorzugsweise auch durch einen hohen Wärmedurchgangswiderstand charakterisiert ist. Das Innenelement 3.7 ist in diesem Fall stoffschlüssig mit dem Innenumfang 4.7 des Glasrohres 1.7 verbunden.

### Bezugszeichenliste

- 1; 1.2; 1.6; 1.7: Glasrohr
- 2; 2.2; 2.6; 2.7: Anordnung zur Erhöhung der Temperaturwechselbeständigkeit fluiddurchströmter druckbelasteter Glasrohre
- 3; 3.2; 3.6; 3.7: Innenelement
- 4: Innenfläche des Glasrohres
- 5: Außenfläche des Innenelementes
- 6: Wand
- 7: Wand
- 8: Innenumfang
- 9: Außenwand
- 10: Innenraum
- 11: Außenumfang
- 12: Innenumfang
- 13a, 13b: axiale Endbereiche
- 14.11 bis 14.nn: Stirnseite
- 15: Halterung
- 16: Halterung
- 17: Wand
- 18: Beschichtung
- 19: dünnwandiges Rohr
- 20: erstes, einseitig verschlossenes äußeres Rohr
- 21: zweites inneres Glasrohr
- d_{A3}: Außendurchmesser des Innenelementes
- d_{I1}: Innendurchmesser des Glasrohres
- d_{A1}: Außendurchmesser des Glasrohres
- d_{I3}: Innendurchmesser des Innenelementes
- s₃: Wandstärke des Innenelementes
- s₁: Wandstärke des Glasrohres
- s₈: Wandstärke der Innenwand 8
- s₉: Wandstärke der Außenwand 9

## Patentansprüche

1. Anordnung (2; 2.2) zur Erhöhung der Temperaturwechselbeständigkeit von Glasrohren (1; 1.2)
1.1 mit einem, von einem Fluid durchströmbaren Glasrohr (1; 1.2); **gekennzeichnet durch** die folgenden Merkmale:
1.2 mit einem in das Glasrohr (1; 1.2) einschiebbaren hohlzylindrischen Innenelement (3; 3.2);
1.3 der vom Innenelement (3; 3.2) umschlossene Hohlraum ist hydraulisch mit dem Innenraum des Glasrohres gekoppelt;
1.4 die Wandstärke (s3) des Innenelementes (3; 3.2) ist kleiner als die Wandstärke des Glasrohres (1; 1.2);
1.5 das Innenelement (3; 3.2) ist im fluiddurchströmten Zustand des Glasrohres wenigstens teilweise frei von einer direkten Wärmekopplung mit dem Glasrohr (1; 1.2);

2. Anordnung (2; 2.2) nach Anspruch 1, **dadurch gekennzeichnet, dass** das Innenelement (3; 3.2) im fluiddurchströmten Zustand des Glasrohres (1, 1.2) vollständig frei von einer direkten Wärmekopplung mit dem Glasrohr (1; 1.2) ist.

3. Anordnung (2; 2.2) nach Anspruch 1 oder 2, **dadurch gekennzeichnet, dass** das Innenelement (3; 3.2) von einem schlauchförmigen Element gebildet wird.

4. Anordnung (2; 2.2) nach einem der Ansprüche 1 bis 3 **dadurch gekennzeichnet, dass** das Innenelement in axialer und/oder radialer Richtung flexibel ist.

5. Anordnung (2; 2.2) nach einem der Ansprüche 1 bis 4, **dadurch gekennzeichnet, dass** das Innenelement (3; 3.2) aus Kunststoff besteht.

6. Anordnung (2; 2.2) nach Anspruch 1 oder 2, **dadurch gekennzeichnet, dass** das hohlzylindrische Innenelement (3; 3.2) von einem dünnwandigen Glasrohr (19, 19.2) gebildet wird.

7. Anordnung (2; 2.2) nach einem der Ansprüche 1 bis 6 **dadurch gekennzeichnet, dass** das Innenelement (3; 3.2) eine geringere Wärmeleitfähigkeit als das Glasrohr (1; 1.2) aufweist.

8. Anordnung (2; 2.2) nach einem der Ansprüche 1 bis 7, **dadurch gekennzeichnet, dass** das Innenelement (3; 3.2) sich über die gesamte axiale Erstreckung des Glasrohres (1; 1.2) erstreckt.

9. Anordnung (2; 2.2) nach einem der Ansprüche 1 bis 8, **dadurch gekennzeichnet, dass** eine Mehrzahl von Innenelementen (3a, 3b, 3c) vorgesehen ist, die einander benachbart angeordnet sind und frei von einer Verbindung miteinander.

10. Anordnung (2; 2.2) nach einem der Ansprüche 1 bis 9, **dadurch gekennzeichnet, dass** das Innenelement (3) im Glasrohr (1; 1.2) geführt ist.

11. Anordnung (2; 2.2) nach Anspruch 10, **dadurch gekennzeichnet, dass** die Führung im Glasrohr (1; 1.2) ausgebildet ist.

12. Anordnung (2; 2.2) nach Anspruch 11, **dadurch gekennzeichnet, dass** das Innenelement mittels einer separaten Führung (15, 16) am Glasrohr (1; 1.2) geführt ist.

13. Anordnung (2.2) nach einem der Ansprüche 1 bis 12 **dadurch gekennzeichnet, dass** das Glasrohr (1.2) ein erstes, einseitig geschlossenes äußeres Rohr (20) umfasst, welches die Außenwand (9) des Glasrohres (1.2) bildet, und ein zweites, in diesem angeordnetes inneres Glasrohr (21), welches zur verschlossenen Seite des äußeren Rohres (20) hin geöffnet ausgeführt ist, umfasst und das Innenelement (3.2) im fluiddurchströmten Zustand wenigstens teilweise frei von einer direkten Wärmekopplung mit dem äußeren und inneren Rohr (20, 21) ist.

14. Anordnung (2.2) nach Anspruch 13, **dadurch gekennzeichnet, dass** das innere Rohr (21) koaxial zum äußeren Rohr (20) angeordnet ist.

15. Anordnung (2; 2.2) nach einem der Ansprüche 1 bis 14, **dadurch gekennzeichnet, dass** der Außenumfang (11) des Innenelementes (3; 3.2) geringfügig kleiner ist, als der Innenumfang (12) des Glasrohres (1; 1.2).

16. Anordnung (2.6; 2.7) zur Erhöhung der Temperaturwechsel-beständigkeit von Glasrohren (1; 1.2)
16.1 mit einem von einem Fluid durchströmbaren Glasrohr (1; 1.2); **gekennzeichnet durch** die folgenden Merkmale:
16.2 mit einem im Glasrohr (1.6; 1.7) angeordneten hohlzylindrischen Innenelement (3; 3.2), dessen Außenumfang (11) am Innenumfang (12) des Glasrohres (1.6, 1.7). anliegt.

17. Anordnung (2.6) nach Anspruch 16, **dadurch gekennzeichnet, dass** das Innenelement (3.6) von einem schlauchförmigen Element gebildet wird.

18. Anordnung (2.6) nach einem der Ansprüche 16 oder 17 **dadurch gekennzeichnet, dass** das Innenelement (3.6) in axialer und/oder radialer Richtung flexibel ist.

19. Anordnung (2.6; 2.7) nach einem der Ansprüche 16 bis 18, **dadurch gekennzeichnet, dass** das Innenelement (3.6; 3.7) aus Kunststoff besteht.

20. Anordnung (2.7) nach einem der Ansprüche 15 bis 18, **dadurch gekennzeichnet, dass** das Innenelement (3..7) stoffschlüssig mit dem Glasrohr (1.7) verbunden ist und eine Beschichtung (18) bildet.

21. Verwendung einer Anordnung gemäß einem der Ansprüche 1 bis 20 in einem Wärmetauscher.

22. Verwendung einer Anordnung gemäß einem der Ansprüche 1 bis 21 in einem Absorberrohr eines Sonnenkollektors.
